Europäisches Patentamt

European Patent Office

Office européen des brevets

(19)

(11) Veröffentlichungsnummer: **0 095 511**
**A1**

(12) ## EUROPÄISCHE PATENTANMELDUNG

(21) Anmeldenummer: 82104615.8

(22) Anmeldetag: 27.05.82

(51) Int. Cl.³: **A 46 B 15/00**, A 46 B 7/04,
B 25 G 3/32

(43) Veröffentlichungstag der Anmeldung: 07.12.83
**Patentblatt 83/49**

(84) Benannte Vertragsstaaten: **AT BE CH DE FR GB IT LI LU NL SE**

(71) Anmelder: **Dr. Hinz Labor, Fachlaboratorium für Kieferorthopädie GmbH, Mont-Cenis-Strasse 5, D-4690 Herne 1 (DE)**

(72) Erfinder: **Hinz, Rolf, Dr. med. dent., Körnerstrasse 6, D-4690 Herne 1 (DE)**

(74) Vertreter: **Herrmann-Trentepohl, Werner, Dipl.-Ing., Schaeferstrasse 18, D-4690 Herne 1 (DE)**

(54) **Vorrichtung zur Pflege der Zähne.**

(57) Bei einer Vorrichtung zur Pflege der Zähne mit einer Zahnbürste (1), deren dem Borstenkopf (78) abgewandtes Stielende (11, 9) als Einsteckende (13) für einen Halter (24) und als Teil eines die Bewegungsfreiheit von Halter (24) und Zahnbürste (1) aufhebenden Spannwerkes ausgebildet ist, ist erfindungsgemäß vorgesehen, daß die Zahnbürste (1) einen Teil eines mehrteiligen Satzes von Zahnpflege- und Zahnüberwachungsinstrumenten (2, 3, 80) bildet, welche jeweils mit dem Zahnbürstenstielende (11, 9) übereinstimmen, und daß der Halter (24) in einer Baueinheit ein den an einem den Halter (24) verschließenden Betätigungsknopf (55) endenden Sperrer (52) des Spannwerkes aufnehmendes Griffstück (25) und eine Daumenstütze (26) vereinigt, welche das jeweils am Einsteckende (12) ausgebildete Sperrstück (18) aufnimmt.

4690 Herne 1,
..aef.. straße 18
..tfach 1140
Pat.-Anw. Herrmann-Trentepohl
...nsprecher: 0 23 23 / 5 10 13
5 10 14

Telegrammanschrift:
..hrpatente Herne
Telex 08 229 853

**Dipl.-Ing. R. H. Bahr** (192 -1981)
**Dipl. - Phys. Eduard Betzler**
**Dipl.-Ing. W. Herrmann-Trentepohl**
PATENTANWÄLTE
PROFESSIONAL REPRESENTATIVES
BEFORE THE EUROPEAN PATENT OFFICE

8000 München 70
Blingenserst. 18 a
Postfach 70 05 99
Pat.-Anw. Betzler
Fernsprecher: 089 / 7 25 40 63
7 25 40 64
7 25 40 65

Telegrammanschrift:
Babetzpat München
Telex 5 215 360
Telefax 089/79 89 88

Bankkonten:
Bayerische Vereinsbank München 952 287
BLZ 700 202 70
Dresdner Bank AG Herne 7-520 499
BLZ 432 800 84
Postscheckkonto Dortmund 558 68-467
BLZ 440 100 46

Ref.: A 31 006 X/Wd.
In der Antwort bitte angeben

Zuschrift bitte nach:

H e r ne 1

25. Mai 1982

Dr. Hinz Labor, Fachlaboratorium für Kieferorthopädie
Mont-Cenis-Str. 5, D-4690 Herne 1

---

"Vorrichtung zur Pflege der Zähne"

---

Die Erfindung betrifft eine Vorrichtung zur Pflege der Zähne mit einer Zahnbürste, deren dem Borstenkopf abgewandtes Stielende als Einsteckende für einen Halter und als Teil eines die Bewegungsfreiheit von Halter und Zahnbürste aufhebenden Spannwerkes ausgebildet ist.

Die Erfindung geht aus von vorbekannten Zahnbürsten, bei denen die durch die Trennbarkeit von Stiel und Halter gegebene Mehrteiligkeit entweder dazu dient, die Zahnbürste in eine verkleinerte, z.B. für die Reise geeignetere Einheit zu versetzen oder mit einem Halter mehrere Zahnbürsten, die man dann einzelnen Personen zuordnen kann, zu benutzen, was beispielsweise bei vielen elektrisch angetriebenen Zahnbürsten der Fall ist.

- 2 -

Die zahnmedizinische Forschung hat jedoch gezeigt, daß mit solchen Zahnbürsten jedenfalls keine ausreichende Pflege der Zähne möglich ist, wenn die betreffende Person damit der Karies und der Paradontose vorbeugen soll. Dabei geht man aber davon aus, daß durch geeignete Werkstoffe für die Borsten, eine bessere Formgebung des Borstenbesatzes und/oder des Zahnbürstenstieles, sowie gegebenenfalls durch Benutzen von medizinischen Zahnpflegemitteln eine ausreichende Vorbeugung erzielt werden kann. Tatsächlich sind aber mit solchen Zahnpflegeeinrichtungen keine optimalen Reinigungserfolge zu erzielen. Außerdem werden solche Zahnbürsten nicht häufig genug gewechselt, obwohl sich eine Zahnbürste bei ausreichender Benutzung in ca. 3 Monaten abgenutzt hat.

Man hat deswegen verschiedene Putzmethoden entwickelt. Bei der Rotationsmethode werden kreisende Bewegungen verlangt, während die sogenannte Rot/Weiß-Methode vertikale Bewegungen vom Zahnfleisch zur Zahnkrone hin erfordert. Bei der Rollmethode wird gleichzeitig eine Stimulation des Zahnfleischsaumes erzielt, während bei der sogenannten Baß-Technik leicht horizontale und gleichzeitig rüttelnde Bewegungen ausgeführt werden sollen. Solche Zahnputzmethoden müssen jedoch individuell angewandt werden. Sie lassen sich mit den bekannten Zahnbürsten im allgemeinen nur schwer verfolgen und führen zur vorzeitigen Ermüdung, so daß im Ergebnis der Reinigungseffekt hinter dem zu erwartenden Ergebnis zurückbleibt. Insbesondere ist es schwierig, Kinder an solche Methoden zu gewöhnen.

26

Die mangelhafte Reinigungswirkung der bislang benutzten Zahnbürsten hat abgesehen von der nicht ausreichend häufigen Benutzung dieser Zahnpflegevorrichtung auch dazu geführt, daß eine große Anzahl von zunächst ungeeigneten Hilfsmitteln von den betreffenden Personen verwendet werden, beispielsweise um Speisereste aus den Zahnzwischenräumen und den Kontaktpunkten der Zähne untereinander zu entfernen. Um die dadurch bedingte Verletzungsgefahr und Nachteile für die Zähne auszuschalten, hat man schließlich eine Zahnseide entwickelt, welche mit zwei Fingern beider Hände erfaßt wird. Einerseits ist es schwierig, mit der Zahnseide den Seitenbereich der Zähne zu erreichen. Deswegen bleibt diese Methode zur Zahnsäuberung häufig unvollkommen. Andererseits wird sie nur in den Fällen störender Fremdkörper angewandt, obwohl eine Zahnsäuberung dieser Art regelmäßig, d.h. wenigstens zweimal wöchentlich durchgeführt werden sollte.

Es ist auch erkannt worden, daß der Reinigungseffekt kontrolliert werden muß. Dazu sind Mundspiegel mit einem Stiel entwickelt worden, der es ermöglicht, daß die betreffende Person den Spiegel im eigenen Mund bewegt und dadurch die Zahnreihen vorzugsweise von hinten selbst kontrollieren kann. Obwohl dadurch das Zahnbewußtsein der Personen erheblich gesteigert werden kann, ist es doch schwierig, solche Spiegel für die Zahnpflege bereit zu halten.

Die Nachteile der bekannten Zahnpflegevorrichtungen vergrößern sich aber dann in erheblichem Maße, wenn ein partiell oder sogar totaler Zahnersatz zu reinigen ist. Das setzt nämlich bestimmte Formgebungen der Zahnbürste voraus, die für die Reinigung der natürlichen Zähne nicht oder jedenfalls nicht ausreichend geeignet sind, während diese Bürstenform eine Voraussetzung für die Reinigung der beispielsweise an partiellem Zahnersatz verwendeten Geschiebe ist.

Der Erfindung liegt die Aufgabe zugrunde, eine Zahnbürste der eingangs bezeichneten Art auf einfache Weise so auszubilden, daß sie eine wirksame Ausführung beliebiger Putzmethoden ermöglicht und außerdem darauf eingerichtet ist, zusätzlich die Zahnzwischenräume und/oder den Zahnersatz erfassende Säuberungsvorgänge auszuführen und gegebenenfalls deren Erfolg zu kontrollieren.

Gemäß der Erfindung wird diese Aufgabe dadurch gelöst, daß die Zahnbürste einen Teil eines mehrteiligen Satzes von Zahnpflege- und Zahnüberwachungsinstrumenten bildet, welche jeweils eine mit dem Zahnbürstenstielende übereinstimmende Handhabe aufweisen, und daß der Halter in einer Baueinheit ein den an einem den Halter verschliessenden Betätigungsknopf endenden Sperrer des Spannwerkes aufnehmendes Griffstück und eine Daumenstütze vereinigt, welche das jeweils am Einsteckende des Stieles ausgebildete Sperrstück aufnimmt.

Da man erfindungsgemäß vorzugsweise bereits bekannte und/oder neuartige Zahnpflege- und/oder Zahnüberwachungsinstrumente mit einer Handhabe versieht, welche mit denjenigen Bauteilen der Zahnbürste übereinstimmen, durch die eine die Bewirkungsfreiheit von Stiel und Halter ausschließende Verbindung mit dem Halter gewährleistet wird, vereinfacht sich der Aufwand für eine
optimale Zahnpflege durch die Ausnutzbarkeit des Halters
für die Handhabung der verschiedenen Instrumente. Unter
diesen können sich auch weitere Spezialbürsten befinden,
wie sie für das Reinigen der Zahnzwischenräume und der
schwer zugänglichen Stellen bei schief stehenden Zähnen,
die einer kiefernorthopädischen Behandlung unterzogen
werden müssen, besonders geeignet sind. Da man außerdem
den Halter auf eine Daumenstütze und ein Griffstück
aufteilt, erhält man einerseits eine ergonomische Form
des Halters, welche insbesondere beim Bürsten der Zähne
bzw. des Zahnersatzes den Ermüdungszeitpunkt so weit
herausschiebt, daß die verschiedenen Putzmethoden mit
ausreichendem Erfolg angewandt werden können. Andererseits erhält man durch das voluminöse Griffstück Platz
für ein Gesperre, das einen hinreichenden starken Form-
und Kraftschluß ermöglicht, so daß man trotz der aus
ergonomischen Gründen erforderlichen Verjüngung des
Halters eine feste Verbindung des Sperrstückes mit dem
als Gestell des Spannwerkes dienenden Halter erzeugen kann.

Die Erfindung hat den Vorteil, daß sie auf einfache
Weise eine wirksame Zahnpflege ermöglicht, die sich in
vier Stadien unterteilen läßt. Zunächst kann die jeweils
optimale Zahnputzmethode mehrfach am Tage durchgeführt
werden, was möglichst nach jeder Mahlzeit, aber stets
nach süßen Speisen und mindestens dreimal am Tag empfohlen
wird. In einem weiteren Schritt müssen die Zahnzwischenräume etwa mit einer hierfür geeigneten Zahnbürste oder
mit Zahnseide gesäubert werden, worauf eine Kontrolle
z.B. mit Hilfe eines zu den Zahnüberwachungsinstrumenten zu zählenden Mundspiegels durchgeführt wird. In einem letzten Schritt können verbrauchte Zahnpflegeinstrumente, also insbesondere abgenutzte Zahnbürsten aus dem Satz ausgeschieden und durch unverbrauchte Instrumente der gleichen Art ersetzt werden, für die der Aufwand relativ gering ist.

Vorzugsweise wird zur weiteren ergonomischen Verbesserung des Halters erfindungsgemäß vorgeschlagen, daß der Halter flache und parallele Seiten und einen wie die Unterseite gekrümmten Rücken aufweist, der im Griffstück parallel zur Unterseite verläuft, die in der Daumenstütze einseitig mit dem gerade durchlaufenden Rücken konvergiert. Dabei hat es sich als zweckmässig erwiesen, den Kraftschluß des Handgriffes zu erhöhen. Das geschieht erfindungsgemäß insbesondere dadurch, daß die Unterseite der Daumenstütze eine von deren Ansatz ausgehende Riffelung aufweist, die die anschließenden Bereiche der Seiten bedeckt und bis zum Ende des Halters reicht. Erfindungsgemäß ist ferner eine ergonomische Verbesserung durch Einbeziehung wenigstens eines Teiles des Stieles des jeweiligen Instrumentes in dem Daumenstützenbereich möglich. Das geschieht erfindungsgemäß dadurch, daß der jeweilige Stiel mit einem Bund gegen das Einsteckende abgesetzt ist und am Bund einen Stielansatz aufweist, dessen Mantelflächen mit den Seiten-, Rücken- und Vorderteilflächen fluchten. Durch den Bund erzielt man einen glatten Übergang der Teile, so daß sich der Handgriff dem Halter und dem Stiel anpassen kann.

Vorzugsweise wird in der erfindungsgemäßen Vorrichtung ein als Zahnseidenhalter ausgebildetes Zahnpflegeinstrument einbezogen, das an einem Stiel einen Gabelkopf aufweist, dessen Gabelspitzen mit dem Enden eines
Zahnseidenabschnittes umwickelbar sind, welche aus
einem am Gabelkopf untergebrachten Zahnseidenwickel
abgeschnitten ist.

Vorzugsweise wird das erfindungsgemäße Spannwerk
kraft- und formschlüssig ausgebildet, um die erforderliche Sicherheit beim Ausschluß der Bewegungsfreiheit
zu erreichen. Dieses Spannwerk nutzt die Elastizität
des Werkstoffes der Teile, die vorzugsweise aus einem
thermoplastischen Kunststoff geformt, beispielsweise
spritzgegossen sind. Zu diesem Zweck ist wie erfindungsgemäß vorgesehen, den Sperrer mit einem Schaltnocken
für das am Ende des jeweiligen Stieles sitzende Sperrstück  sowie mit einem Anschlag zu versehen, welcher
einen Axialhub des Sperrstückes im Halter mit einer in
diesem ausgebildeten Leiste begrenzt, die ihrerseits
mit einer am Einsteckende des Stieles ausgebildeten
Sperrklinke den Formschluß des Halters mit dem jeweiligen Instrument herbeiführt.

Die Teile lassen sich so bemessen, daß am rückwärtigen
Ende des Axialhubes der Schaltnocken dem Einsteckende
des Stieles anliegt und am vorderen Ende des Leerhubes
die Sperrklinke vor der Leiste steht. Dann ist es möglich, das Einsteckende so weit in den Halter zu schieben,
daß der mit dem Sperrer verbundene Knopf aus dem Ende
des Halters heraustritt, sobald die Sperrklinke hinter
die Leiste eingerastet ist. Der Sitz der Teile ist
absolut sicher, weil die Sperrklinke und der Anschlag sich teilweise axial überdecken und daher das Spiel der Teile im Halter ausgeschaltet ist. Durch Eindrücken des Knopfes kann infolge des dabei durchmessenen Axialhubes die Sperrklinke über die Leiste geschoben und dadurch der Stiel des betreffenden Elementes entsperrt werden.

Die Einzelheiten der Erfindung ergeben sich aus der nachfolgenden Darstellung einer Ausführungsform anhand der Figuren in der Zeichnung; es zeigen

Fig. 1 mehrere in der erfindungsgemäßen Vorrichtung zusammengefaßte Zahnpflege- und Zahnüberwachungsinstrumente in teilweise mehreren Ansichten,

Fig. 2 in einer Seitenansicht, die teilweise im Schnitt gezeichnet ist, den erfindungsgemäßen Halter für die Instrumente nach Fig. 1,

Fig. 3 in der Fig. 2 entsprechender Darstellung den Halter in einer Ansicht von unten,

Fig. 4 einen Schnitt längs der Linie IV-IV der Fig.2 ,

Fig. 5 einen Schnitt längs der Linie V-V der Fig.2 ,

Fig. 6 eine abgebrochene Darstellung des Zusammenwirkens der Teile in einer der Fig. 2 entsprechenden Wiedergabe, die teilweise im Schnitt gehalten und abgebrochen dargestellt ist,

Fig. 7 eine auseinandergezogene Darstellung der Teile in einer der Fig. 2 entsprechenden Ansicht und

Fig. 8 eine Draufsicht auf den Gegenstand der Fig. 7.

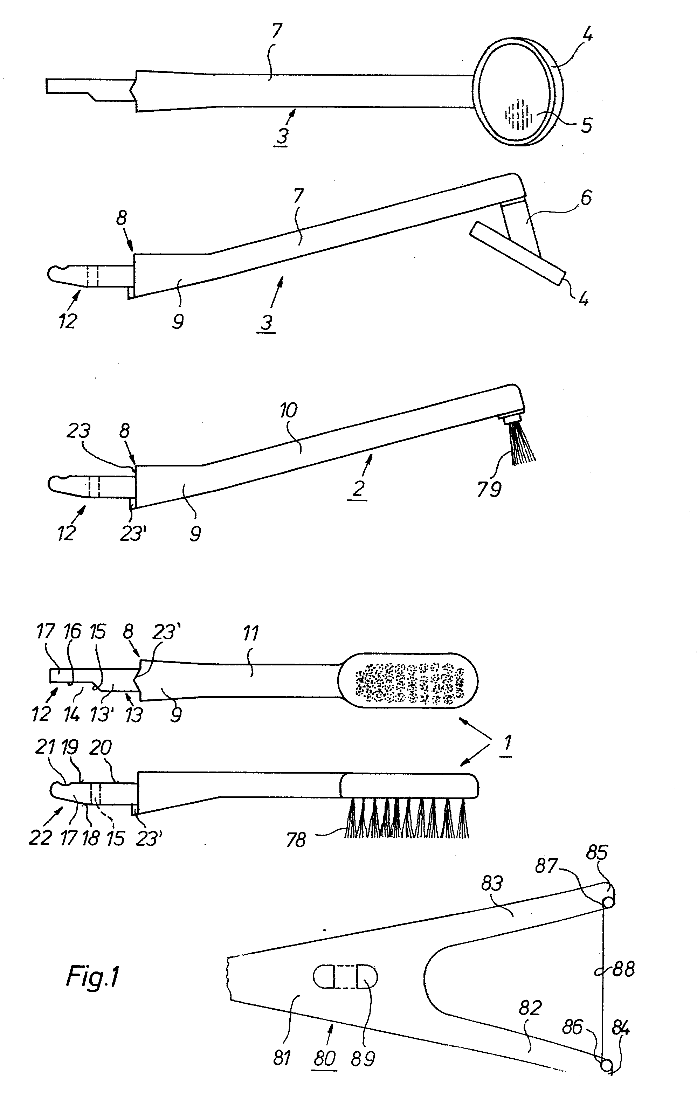

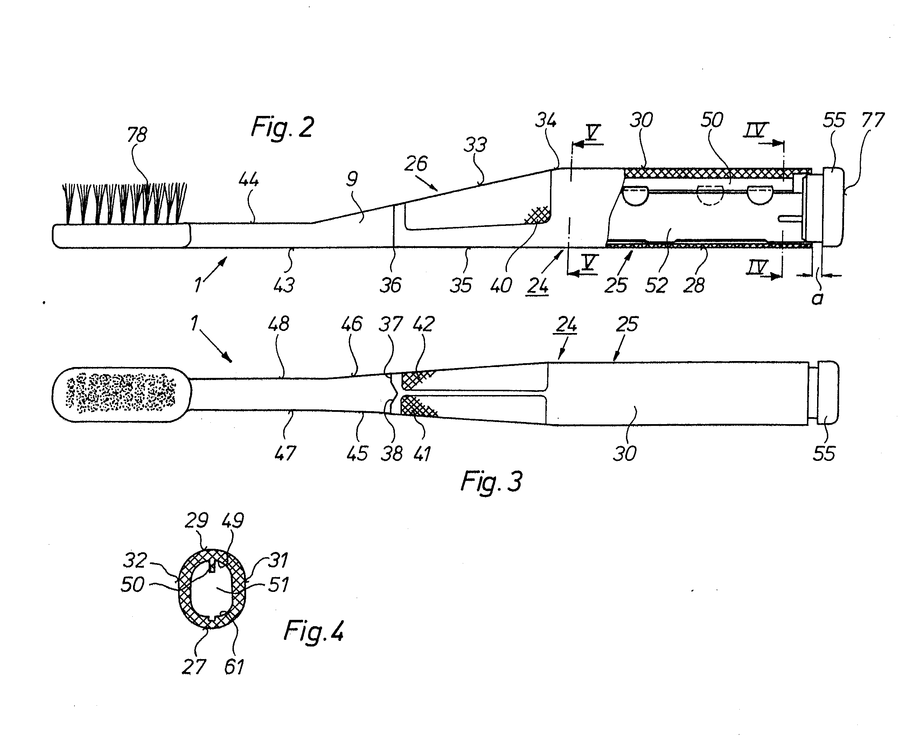

Gemäß der Darstellung in den Figuren 1 und 2 bildet eine in der Fig. 1 unten in zwei Ansichten dargestellte Zahnbürste 1 einen Teil eines mehrteiligen Reinigungssatzes von Zahnpflege- und Zahnüberwachungsinstrumenten. Dargestellt sind in Fig. 1 bei 2 eine Zwischenraumbürste und bei 3 als Überwachungsinstrument ein Mundspiegel, der aus einem Rahmen 4,einem Hohlspiegel 5, einem Rahmenhalter 6 und einem Stiel 7 besteht, wobei die Teile 4, 6 und 7 eine Baueinheit bilden. Jedes der bei 1, 2 und 3 wiedergegebenen Instrumente hat übereinstimmende Teile. Dazu gehören der jeweils an einem Bund 8 endende Stielansatz 9, der eine Baueinheit mit dem jeweiligen Stiel 7, 10, 11 unter einem Einsteckende 12 bildet, das bei allen Instrumenten gleich ist. Das Einsteckende besteht aus einem Schaft 13 mit einer einseitigen Aussparung 14, die von einer dachförmigen Schräge 15 des Schaftansatzes 13' und einer im Schaftansatz 13' parallelen Fläche 16 der Schaftspitze 17 begrenzt wird. Der Schaft 13 hat einen rechteckigen Querschnitt, der im Schaftansatz 13' überall gleich ist und in der Schaftspitze 17 sich durch die Schrägfläche 15 und durch eine schräg verlaufende Unterfläche 18 verjüngt ist. Die der Fläche 18 gegenüberliegende Fläche 19, welche mit der entsprechenden Fläche 20 des Schaftansatzes 13' fluchtet, trägt ihrerseits eine bogenförmig begrenzte Aussparung 21, so daß die Schaftspitze 17 eine allgemein mit 22 bezeichnete Sperrklinke bildet.

Der Bund 8 wird von einer im wesentlichen kreisförmigen Ringfläche 23 begrenzt, aus der jedoch eine dachförmige Schneide 23$^I$ nach vorn vorspringt.

In den Figuren 2 bis 4 ist insbesondere der Halter 24 zu erkennen. Er faßt in einer Baueinheit ein rohrförmiges Griffstück 25 und eine Daumenstütze 26 zusammen. Das Griffstück hat gemäß der Darstellung der Fig. 4 einen überall gleichen Querschnitt. In diesem begrenzt ein halbkreisförmiger Bogen 27 den Rücken 28 des Griffstückes 25 und ein diesem entsprechender Bogen 29 die Unterseite 30 des Griffstückes. Die Bögen 27 und 29 sind mit flachen und parallelen Seiten 31 und 32 verbunden.

Während im Griffstück 25 gemäß der Darstellung der Fig.2 der Rücken 28 und die von dem Bogen 29 gebildete Unterseite 30 parallel verlaufen, ist in der Daumenstütze 26 die Unterseite 33 einseitig in Richtung auf den Rücken 28 abgewinkelt und konvergiert mit diesem. Der Ansatz 34 der Abwinkelung stellt den Beginn der Daumenstütze dar, in der der Rücken 28 des Griffstückes durchläuft und bei 35 gezeichnet ist. Das Griffstück endet an einem außen bei 36 kreisförmigen Bund, der innen eine Rechteckbegrenzung aufweist, die dem Querschnitt des Zapfens 13 entspricht. Demzufolge ist in der Bundfläche 37 eine dachförmige Aussparung 38 vorgesehen, in die die dachförmige Schneide 23$^I$ am Bund 8 paßt. Auf diese Weise ist eine zusätzliche Verdrehsicherung geschaffen, die außerdem verhindert, daß die Instrumente falsch mit dem Halter 24 zusammengefügt werden.

Die Daumenstütze 26 weist auf ihrer Unterseite 33 eine Riffelung 40 auf, die auf zwei parallele Felder 41 und 42 aufgeteilt ist, welche die anschließenden Bereiche der Seiten, die den Seitenteilen 31 und 32 im Halter 24 entsprechen, bedeckt und bis zum Ende, d.h. bis zum Bund 36 des Halters 24 reichen.

Der jeweilige Stiel ist nach Zusammenfügen mit dem Halter 24 mit seinem Bund 8 derart auf dem Bund 36 abgestützt, daß sich ein absatzloser Übergang der Rückenseiten-und Unterseitenflächen des jeweiligen Stielansatzes 9 zu den entsprechenden Flächen der Daumenstütze 26 ergibt. Dabei fluchtet die Rückenfläche 43 des jeweiligen Stieles mit den Rückenflächen 28 und 35, während die Unterseite 44 des Stieles erst im äußeren Bereich parallel zur Rückenfläche 43 verläuft. Konische Übergänge 45, 46 sind für die Seitenflächen 47, 48 des Stieles vorgesehen. Bei der in den Figuren 2 bis 4 wiedergegebenen Zahnbürste ergibt sich auf diese Weise eine ergonomisch günstige Gestaltung aller Teile, bei der mit den vier Fingern einer Hand das Griffstück 25 des Halters umfaßt und der Daumen auf den geriffelten Flächen 41,42 der Stütze 26 gehalten wird, wodurch beim Bürsten eine ermüdungsfreie Handhabung gewährleistet wird.

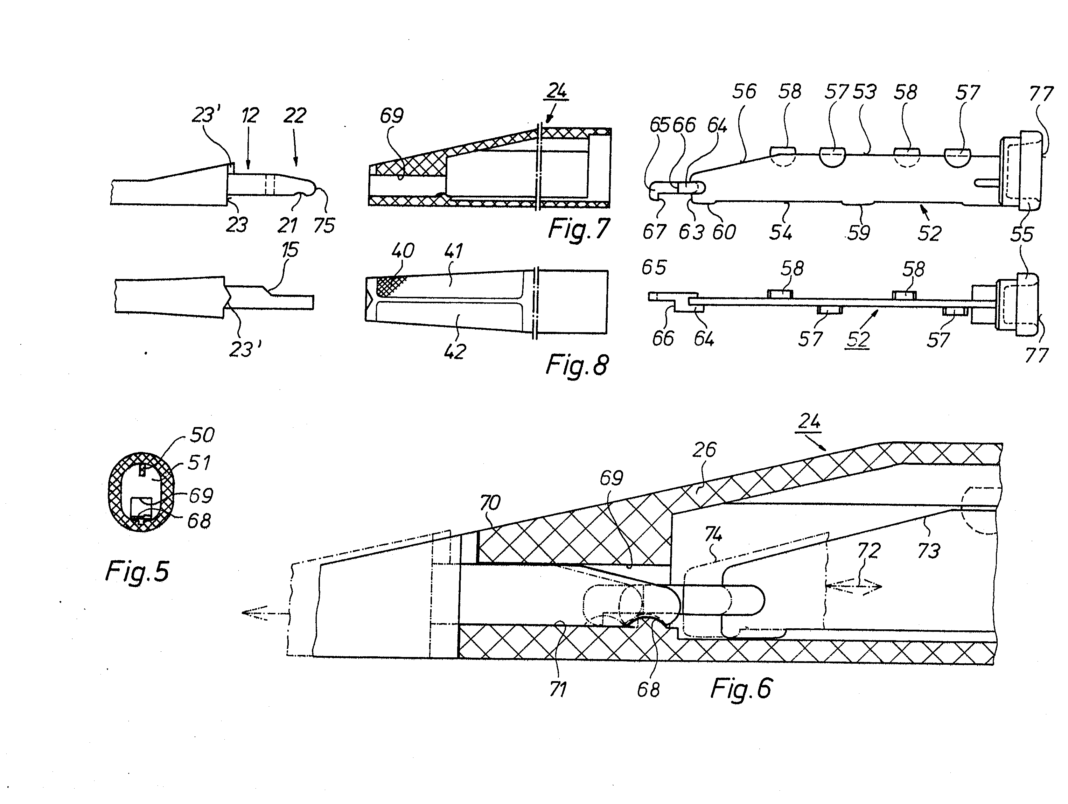

Auf der der Unterseite 30 gegenüberliegenden Innenseite 49 des Griffstückes 25 ist eine achsparallele und im Querschnitt rechteckige Führungsleiste 50 ausgebildet, die mit den Teilen des Halters 24 eine Baueinheit bildet. Im übrigen ist insbesondere das Griffstück 25 wie bei 51 in Fig. 4 dargestellt, hohl ausgebildet. Es kann daher den mit 52 bezeichneten Sperrer eines nachfolgend im einzelnen zu beschreibenden Spannwerkes aufnehmen. Unter Bezugnahme insbesondere auf die Darstellung der Figuren 7 und 8 ergibt sich, daß der Sperrer 52 einen plattenförmigen Körper aufweist, der im rückwärtigen Teil von im wesentlichen parallelen Kanten 53, 54 begrenzt ist und mit einem Druckknopf 55 eine Baueinheit bildet. Im vorderen Teil des Sperrers 52 konvergiert die Kante 53 bei 56 mit der Kante 54. Im parallelen Bereich der Kanten 52 und 53 befindet sich beiderseits der Kante 53 auf jeder Seite des Plattenkörpers ein jeweils mit diesem einstückiges Führungsnockenpaar 57 bzw. 58. Der Innenabstand der Nocken 57 und 58 entspricht der Breite der Führungsleiste 50, so daß eine Geradführung in axialer Richtung für den Sperrer 52 durch das Zusammenwirken der Führungsnockenpaare 57 und 58 mit der Leiste 50 entsteht.

Auf der gegenüberliegenden Kante 54 befinden sich Vorsprünge 59, 60, die zur Abstützung des Sperrers 52 auf der Innenseite 61 der Krümmung 27 im Griffstück 25 dienen (Fig. 4).

An der infolge der konvergierenden Kante 56 gegenüber der dem Druckknopf 55 zugeordneten Kante verkürzten Kante 63 des Plattenkörpers sitzt ein Schaltnocken 64, der mit einem hakenförmigen Anschlag 65 und den Plattenkörper des Sperrers 52 eine Baueinheit bildet. Die Stirnfläche 66 des Schaltnockens 64 begrenzt zusammen mit der Hakenmaulfläche 67 einen Axialhub, den der Sperrer 52 gegenüber einer bogenförmigen Leiste 68 (Fig. 6) der Daumenstütze 26 ausführen kann und der durch die strichpunktiert gezeichneten Stellung der Teile erkennbar ist. Die Leiste 68 sitzt in einer rechteckigen Aussparung 69 am freien Ende 70 der Daumenstütze 26.

Bei der aus der in den Figuren 7 und 8 wiedergegebenen Ausgangsstellung läßt sich der Sperrer 52 von hinten in den Halter 24 einschieben, bis der Anschlag 67 über den abgerundeten Kopf der Leiste 68 gleitet und sich dahinter auf der anschließenden Fläche 71 abstützt. Das ermöglicht die Elastizität der Teile 64 und 67. Wie der Doppelpfeil 72 der Fig. 6 erkennen läßt, kann der Sperrer 52 im Halter 24 einen Leerhub ausführen, dessen rückwärtige Endlage durch die ausgezogen bei 73 wiedergegebene Stellung des Sperrers angedeutet ist, während dessen vordere Endlage strichpunktiert bei 74 in Fig. 6 gezeichnet ist.

Wenn der Benutzer eines der in Fig. 1 wiedergegebenen Instrumente, beispielsweise die aus den Fig. 2 bis 4 in der unteren Darstellung der Fig. 1 wiedergegebene Zahnbürste benutzen will, führt er das Einsteckende 12 des betreffenden Instrumentes in die rechteckige Aussparung 69 ein. Das ist zunächst ohne merklichen Widerstand möglich, bis die gekrümmte Stirnfläche 75 der Sperrklinke 22 in der Stirnfläche 65 des Anschlages 67 liegt. Ein weiteres Einschieben des Einsteckendes 12 setzt die Überwindung eines Widerstandes voraus, der sich durch die enge Passung der Aussparung 66, der Aussparung 71 und der Sperrklinke 22 ergibt, wodurch ein Kraftschluß entsteht. Die Überwindung dieses Kraftschlusses führt dazu, daß sich die gekrümmte Fläche 75 der Sperrklinke 22 schließlich auf der Fläche 66 des Schaltnockens 64 abstützt und über diese Fläche den Sperrer 52 in seine rückwärtige Endstellung verschiebt, wobei dieser den Leerhub ausführt. Gegen Ende des Leerhubes schiebt sich die Sperrklinke 22 mit ihrer Aussparung 21 über die Krümmung der Leiste 68, so daß ein Formschluß eintritt, der zusammen mit dem Kraftschluß eine feste Versperrung der Teile herbeiführt.

In der beschriebenen Endstellung tritt der Knopf 55, wie aus der Darstellung der Fig. 2 und 3 ersichtlich, in den dort mit a bezeichneten Leerhub aus dem Ende des Halters 24 aus. Hat der Benutzer die mit dem Instrument verbundene Zahnreinigung ausgeführt, so drückt er mit dem Daumen auf die entsprechend gestaltete Stirnseite 77 des Knopfes 55 und verschiebt dadurch den Sperrer 52 axial um den Hub a. Durch den Formschluß zwischen der Sperrklinke 22 und dem Schaltnocken 64 wird hierbei die Sperrklinke 22 mit ihrer Aussparung 21 über die gekrümmte Fläche der Leiste 68 zurückgeschoben. Dadurch wird der Formschluß aufgehoben, was wegen der Krümmung der Fläche 68 und der Krümmung der Aussparung 21 zunächst gegen einen bestimmten Widerstand und dann schlagartig erfolgt, so daß das Einsteckende 12 unter Ausnutzung der Elastizität des Werkstoffes aus der Aussparung 71 der Daumenstütze 26 herausspringt und das Instrument frei wird. Der Sperrer 52 bleibt jedoch hierbei infolge des Anschlages 67 im Halter 24 stecken.

Während die Zahnbürste 1 den üblichen Borstenbesatz 78 aufweist, dient das Instrument 2 mit seinem Borstenbüschel 79 zur Reinigung der Zahnzwischenräume bzw. der Teile eines Zahnersatzes.

In Fig. 1 ist ein Zahnseidehalter 80 wiedergegeben. Der in diesem Fall nicht wiedergegebene Stiel trägt an seinem freien Ende eine Gabel mit einem Gabelkopf 81 und zwei Gabelzinken 82, 83, deren Spitzen 84, 85 mit den Enden 86, 87 eines Abschnittes 88 aus Zahnseide umwickelt werden können. In einer Aussparung 89 des Kopfes 81 befindet sich ein Wickel aus Zahnseide, von dem der Abschnitt 88 abgewickelt und erneuert werden kann.

Dieser Zahnseidehalter 80 ermöglicht vor allem die Säuberung der Zahnzwischenräume und der Kontaktpunkte der Zähne untereinander im Seitenzahnbereich. Über einen nicht dargestellten Arretierungskopf auf der Rückseite des Zahnseidehalters 80 wird aus dem Wickel 89 der Abschnitt 88 in einer Länge von 20-30 cm abgewickelt und nach dem Säuberungsvorgang eines Zahnzwischenraumes jeweils verlängert, so daß für jeden neuen Zahnzwischenraum auch neue Zahnseide Verwendung findet.

Patentansprüche:

1. Vorrichtung zur Pflege der Zähne mit einer Zahnbürste, deren dem Borstenkopf abgewandtes Stielende als Einsteckende für einen Halter und als
Teil eines die Bewegungsfreiheit von Halter und
Zahnbürste aufhebenden Spannwerkes ausgebildet ist,
d a d u r c h   g e k e n n z e i c h n e t ,
daß die Zahnbürste (1) einen Teil eines mehrteiligen Satzes von Zahnpflege- und Zahnüberwachungsinstrumenten (2, 3, 80) bildet, welche jeweils mit
dem Zahnbürstenstielende (11, 9) übereinstimmen und
daß der Halter (24) in einer Baueinheit ein den an
einem den Halter 24) verschließenden Betätigungsknopf (55) endenden Sperrer (52) des Spannwerkes
aufnehmendes Griffstück (25) und eine Daumenstütze
(26) vereinigt, welche das jeweils am Einsteckende
(12) ausgebildete Sperrstück (18) aufnimmt.

2. Vorrichtung nach Anspruch 1 , d a d u r c h
g e k e n n z e i c h n e t , daß der Halter (24)
flache und parallele Seiten (31, 32) und einen
wie die Unterseite (30, 33) gekrümmten Rücken
(28, 35) aufweist, der im Griffstück (25) parallel
zur Unterseite (30) verläuft, die mit der Daumenstütze (26) einseitig mit dem gerade durchlaufenden
Rücken (35) konvergiert.

3. Vorrichtung nach einem der Ansprüche 1 oder 2 ,
d a d u r c h   g e k e n n z e i c h n e t ,
daß die Unterseite der Daumenstütze (26) eine von
derem Ansatz (34) ausgehende Riffelung (40) aufweist, die die anschließenden Bereiche der Seiten bedeckt und bis zum Ende (36) des Halters (24) reicht.

4. Vorrichtung nach einem der Ansprüche 1 bis 3, d a d u r c h   g e k e n n z e i c h n e t , daß der jeweilige Stiel (7, 10, 11) mit einem Bund (8) gegen das Einsteckende (12) abgesetzt ist und am Bund einen Stielansatz (9) aufweist, dessen Mantelflächen (43,44,45,46) mit den Seiten-, Rücken- und Vorderteilflächen (30,31, 32, 28, 35, 33) des Halters (24) fluchten.

5. Vorrichtung nach einem der Ansprüche 1 bis 4, d a d u r c h   g e k e n n z e i c h n e t , daß eines der Zahnpflegeinstrumente als Zahnseidehalter (80) ausgebildet ist, welcher einen an einen Stiel ansetzenden Gabelkopf (81) aufweist, dessen Gabelzinken (82, 83) mit den Enden eines Zahnseideabschnittes (88) umwickelbar sind, welcher Teil eines in dem Gabelkopf (81) untergebrachten Wickels (89) ist.

6. Vorrichtung nach einem der Ansprüche 1 bis 5, d a d u r c h   g e k e n n z e i c h n e t , daß der Sperrer (52) des Spannwerkes einen Schaltnocken (64) für das am Ende des jeweiligen Stieles (7, 10, 11) sitzende Sperrstück (18), sowie mit einem Anschlag (67) versehen ist, welcher einen Axialhub des Sperrers (52) im Halter (24) mit einer in diesem ausgebildeten Leiste (68) begrenzt, die ihrerseits mit einer am Einsteckende (12) des Stieles ausgebildeten Sperrklinke (22) den Formschluß des Halters (24) mit dem jeweiligen Instrument herbeiführt.

7. Vorrichtung nach einem der Ansprüche 1 bis 6, d a d u r c h   g e k e n n z e i c h n e t , daß der Anschlag (67) und der Schaltnocken (64) eine Aussparung begrenzen, in die die Sperrklinke (22) bis zum Anschlag ihrer gekrümmten Stirnseite (75) mit der wirksamen Fläche (66) des Schaltnockens (64) einführbar ist.

8. Vorrichtung nach einem der Ansprüche 1 bis 7, d a d u r c h   g e k e n n z e i c h n e t , daß die Leiste (68) eine gekrümmte Sperrfläche aufweist  und die Sperrklinke (22) eine gekrümmte Aussparung (21) besitzt.

9. Vorrichtung nach einem der Ansprüche 1 bis 8, d a d u r c h   g e k e n n z e i c h n e t , daß im Halter (24) eine Geradführung aus einer Leiste (50) für den Sperrer (52) vorgesehen ist, der mit der Leiste (50) zusammenwirkende Führungsnockenpaare (57, 58) und mit der Innenfläche (61) des Halters (24) zusammenwirkende Vorsprünge (59, 60) aufweist.

Fig.1

Fig. 2

Fig. 3

Fig. 4

Fig.5

Fig.6

Fig.7

Fig.8

0095511

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | A 46 B 15/00 |
| A | FR-A-2 450 579 (PAYEN)<br>* Seite 1, zeilen 1-3, 31-33; Seite 2, Zeilen 11-32, 35-40; Seite 3, Zeilen 1, 9-21; Ansprüche 1-5; Abbildungen 1,2,4,8-14 * | 1,5 | A 46 B 7/04<br>B 25 G 3/32 |
| | --- | | |
| A | US-A-3 672 377 (GREENACRE)<br>* Spalte 1, Zeilen 20-26; Spalte 2, Zeilen 53-75; Spalte 3, Zeilen 1-29; Anspruch; Abbildungen * | 1,5 | |
| | --- | | |
| A | US-A-2 139 593 (KOHLER et al.)<br>* Insgesamt * | 1,5 | |
| | --- | | |
| A | FR-E- 58 747 (MARIE SAINT-GERMAIN)<br>* Zusammenfassung 1,2; Abbildungen 2,4 * | 1 | RECHERCHIERTE SACHGEBIETE (Int. Cl. ³) |
| | --- | | |
| A | US-A-4 227 276 (GINSBURG et al.)<br>* Ansprüche 5,6; Abbildungen 4-6 * | 1 | A 46 B<br>B 25 G |
| | --- | | |
| A | GB-A-2 044 089 (KENT & SONS)<br>* Abbildungen 9-12, 21-24 * | 1 | |
| | --- | | |
| A | US-A-1 887 913 (BELL)<br>* Anspruch; Abbildungen * | 1 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 08-02-1983 | BOURSEAU A.M. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-1 859 425 (BELL)<br>* Ansprüche; Abbildungen * | 1 | |
| A | US-A-2 236 627 (McWHIRTER)<br>* Ansprüche; Abbildungen * | 1 | |
| A | US-A-1 774 031 (McLELLAN)<br>* Anspruch; Abbildungen * | 1 | |
| A | US-A-1 719 426 (GADE)<br>* Ansprüche; Abbildungen * | 1 | |
| A | DE-C- 95 323 (LINGNER)<br>* Anspruch; Abbildungen * | 1 | |
| A | US-A-1 861 363 (SCHEUNER)<br>* Ansprüche; Abbildungen * | 1 | RECHERCHIERTE SACHGEBIETE (Int. Cl. ³) |
| A | GB-A-1 449 407 (FEATHER KOGYO K.K.)<br>* Ansprüche; Abbildungen * | 1 | |
| A | US-A-2 615 247 (WATERS)<br><br>* Ansprüche; Abbildungen * | | |

Der vorliegende Recherchenbericht wurde für alle Patentansprüche erstellt.

| Recherchenort<br>DEN HAAG | Abschlußdatum der Recherche<br>08-02-1983 | Prüfer<br>BOURSEAU A.M. |
|---|---|---|